# EUROPÄISCHE PATENTSCHRIFT

(11) **EP 0 653 850 B1**
(45) Veröffentlichungstag und Bekanntmachung des Hinweises auf die Patenterteilung: **27.02.2002**
(21) Anmeldenummer: 94116879.1
(22) Anmeldetag: 26.10.1994
(51) Int. Cl.: H04B 1/10, H04B 1/16

(54) **Schaltungsanordnung zur Erkennung von Nachbarkanalstörungen**
Circuit for recognizing adjacent channel interference
Circuit pour reconnaître l'interférence d'un canal adjacent

(30) Priorität: 12.11.1993 DE 4338700
(43) Veröffentlichungstag der Anmeldung: 17.05.1995
(73) Patentinhaber: Blaupunkt-Werke GmbH, 31132 Hildesheim (DE)
(72) Erfinder: Herrmann, Matthias, Dr., D-31141 Hildesheim (DE)

(56) Entgegenhaltungen:
- EP-A- 0 449 199
- US-A- 4 356 568

## Beschreibung

Die Erfindung betrifft eine Schaltungsanordnung zur Erkennung von Nachbarkanalstörungen in einem Stereo-Rundfunkempfänger, bei dem ein Stereo-Multiplexsignal vorhanden ist. Ferner beschäftigt sich die Erfindung mit Maßnahmen zur Reduzierung der subjektiv empfundenen Störwirkung von Nachbarkanalstörungen.

Aus der US 4 356 568 ist ein FM-Empfänger bekannt, bei dem in einem nichtabgestimmten Zustand der Rauschpegel hoch ist. Der Rauschpegel wird durch einen ersten Detektor detektiert, um ein Rücksetzsignal an einen Flip-Flop-Schaltkreis zu liefern. Als Ergebnis wird der Flip-Flop-Schaltkreis zurückgesetzt und ein schmalbandiger Signalempfang eingestellt. Wenn sich beim Abstimmungsvorgang eine Annäherung an einen Abstimmungspunkt ergibt, so wird im allgemeinen der Rauschanteil im Demodulationssignal beträchtlich reduziert. In diesem Fall liefert der erste Detektor kein Rücksetzsignal mehr. Am Abstimmungspunkt selbst ist kein Gleichspannungsanteil im Demodulationssignal enthalten, aufgrund der "S" Kurvencharakteristik des Demodulators. Daher wird der Ausgangspegel eines zweiten Detektors, der anhand der Gleichspannungskomponente die Abstimmbedingung detektiert, vom Nullpegel auf einen hohen Pegel gesetzt. Dieser wird ebenfalls dem Flip-Flop-Schaltkreis über einen Differenziationsschaltkreis zugeführt. Als Ergebnis wird der Flip-Flop-Schaltkreis gesetzt und ein breitbandiger Empfang eingestellt.

Signale aus Nachbarkanälen können beim UKW-Empfang aufgrund einer unzureichenden Filterung in den HF-Vorstufen und in der Zwischenfrequenzebene zu Störungen im jeweils empfangenen Kanal führen. Die Aufgabe der vorliegenden Erfindung besteht daher darin, solche Störungen zu erkennen, wobei dieses vorzugsweise mit digitalen Schaltungen, vorzugsweise in integrierter Schaltungstechnik, verwirklicht werden soll. Es soll ferner im Rahmen der Erfindung eine Reduzierung der subjektiven Störwirkung von Nachbarkanalstörungen erzielt werden.

Die Erkennung von Nachbarkanalstörungen wird bei der erfindungsgemäßen Schaltungsanordnung dadurch bewirkt, daß in Abhängigkeit von einem Gleichspannungsanteil des Stereo-Multiplexsignals und in Abhängigkeit von Spektralkomponenten oberhalb von 60 kHz ein die Nachbarkanalstörungen anzeigendes Signal (Nachbarkanalstörungssignal) abgeleitet wird.

Durch die Verwendung von zwei Kriterien zum Erkennen von Nachbarkanalstörungen ist bei der erfindungsgemäßen Schaltungsanordnung eine Unterscheidung zwischen Nachbarkanalstörungen und andersartigen Störungen, die ebenfalls zu höherfrequenten Spektralkomponenten im Stereo-Multiplexsignal führen, möglich. Derartige Störungen sind beispielsweise Mehrwegeempfang oder Zündstörungen.

Obwohl im Rahmen der Erfindung als Nachbarkanalstörung auch andere Signale abgeleitet werden können, ist die Ableitung eines binären Signals, das lediglich das Vorhandensein oder das Nichtvorhandensein von Nachbarkanalstörungen kennzeichnet, für eine Weiterverarbeitung in vielen Fällen besonders vorteilhaft.

Bei einer Weiterbildung der erfindungsgemäßen Schaltungsanordnung ist daher vorgesehen, daß ein erstes Hilfssignal abgeleitet wird, wenn der Gleichspannungsanteil des Stereo-Multiplexsignals größer als ein erster Bezugswert ist, daß ein zweites Hilfssignal gebildet wird, wenn die Amplituden der Spektralkomponenten oberhalb von 60 kHz des Stereo-Multiplexsignals größer als ein zweiter Bezugswert sind, und daß das erste und das zweite Hilfssignal zur Bildung des Nachbarkanalstörungssignals und-verknüpft werden.

Vorteilhafte Ausgestaltungen der erfindungsgemäßen Schaltungsanordnung bestehen darin, daß das erste Hilfssignal dadurch abgeleitet wird, daß das Stereo-Multiplexsignal tiefpaßgefiltert und gleichgerichtet wird und daß das gleichgerichtete Signal mit dem ersten Bezugswert verglichen wird und daß das hochpaßgefilterte Stereo-Multiplexsignal gleichgerichtet und tiefpaßgefiltert wird und daß das tiefpaßgefilterte Signal mit dem zweiten Bezugswert verglichen wird.

Eine Verminderung der subjektiv empfundenen Störwirkung mit Hilfe des Nachbarkanalstörungssignals kann durch eine Dämpfung der Audiosignale um beispielsweise 10dB bis 20dB bestehen. Eine besonders vorteilhafte Möglichkeit zur Reduzierung der Störwirkung besteht jedoch darin, daß das Nachbarkanalstörungssignal einem Integrator zuführbar ist, der in einer Richtung bei vorhandenen Nachbarkanalstörungen und in entgegengesetzter Richtung bei nichtvorhandenen Nachbarkanalstörungen integriert, und daß das Ausgangssignal des Integrators eine Dämpfung von aus dem Stereo-Multiplexsignal gewonnenen Audiosignalen derart bewirkt, daß bei Integration in entgegengesetzter Richtung die Dämpfung zunimmt.

Bei dieser Weiterbildung wird in vorteilhafter Weise die Dauer von Nachbarkanalstörungen berücksichtigt. Dabei ist vorteilhaft, wenn die Zeitkonstante des Integrators in der einen Richtung kleiner als in der entgegengesetzten Richtung oder gleich Null ist. Um eine zu starke Dämpfung zu vermeiden, kann dabei vorgesehen sein, daß das Ausgangssignal des Integrators über einen Begrenzer geleitet wird.

Eine andere Weiterbildung der erfindungsgemäßen Schaltungsanordnung besteht darin, daß bei Ableitung weiterer die Empfangsqualität darstellender Signale das Nachbarkanalstörungssignal diesen Signalen überlagert wird und daß das dadurch entstehende Signal anschließend begrenzt wird.

Ein Ausführungsbeispiel der Erfindung ist in der Zeichnung anhand mehrerer Figuren dargestellt und in der nachfolgenden Beschreibung näher erläutert. Es zeigt:
- Fig. 1: ein Blockschaltbild zur Ableitung des ersten Hilfssignals bei der erfindungsgemäßen Schaltungsanordnung,
- Fig. 2: ein Blockschaltbild eines hochintegrierten Stereo-Rundfunkempfängers mit der erfindungsgemäßen Schaltungsanordnung,
- Fig. 3: ein Teil des Blockschaltbildes nach Fig. 2 in detaillierterer Ausführung,
- Fig. 4: ein Blockschaltbild einer Schaltungsanordnung zur Ableitung des zweiten Hilfssignals und
- Fig. 5: ein Blockschaltbild einer Schaltungsanordnung zur Bildung eines Steuersignals für die Dämpfung der Audiosignale aus dem Nachbarkanalstörungssignal und einem weiteren Signal.

Gleiche Teile sind in den Figuren mit gleichen Bezugszeichen versehen. Die erfindungsgemäße Schaltungsanordnung kann auf verschiedene Weise verwirklicht werden. So können beispielsweise einzelne oder Gruppen der dargestellten Blöcke durch geeignete Schaltungen, insbesondere integrierte Schaltungen, realisiert werden. Bei sehr hohem Integrationsgrad ist es ferner möglich, die gesamte digitale Signalverarbeitung des Empfängers in einem integrierten Schaltkreis zu realisieren, wobei Signalverarbeitungsschritte, wie beispielsweise Filterungen oder nichtlineare Wichtungen, durch Rechenoperationen durchgeführt werden. Innerhalb eines integrierten Schaltkreises können zur Realisierung eines Empfängers mit der erfindungsgemäßen Schaltungsanordnung auch digitale Signalprozessoren und andere digitale Schaltungen, wie beispielsweise Schieberegister, Flip-Flops usw., gemeinsam angeordnet sein.

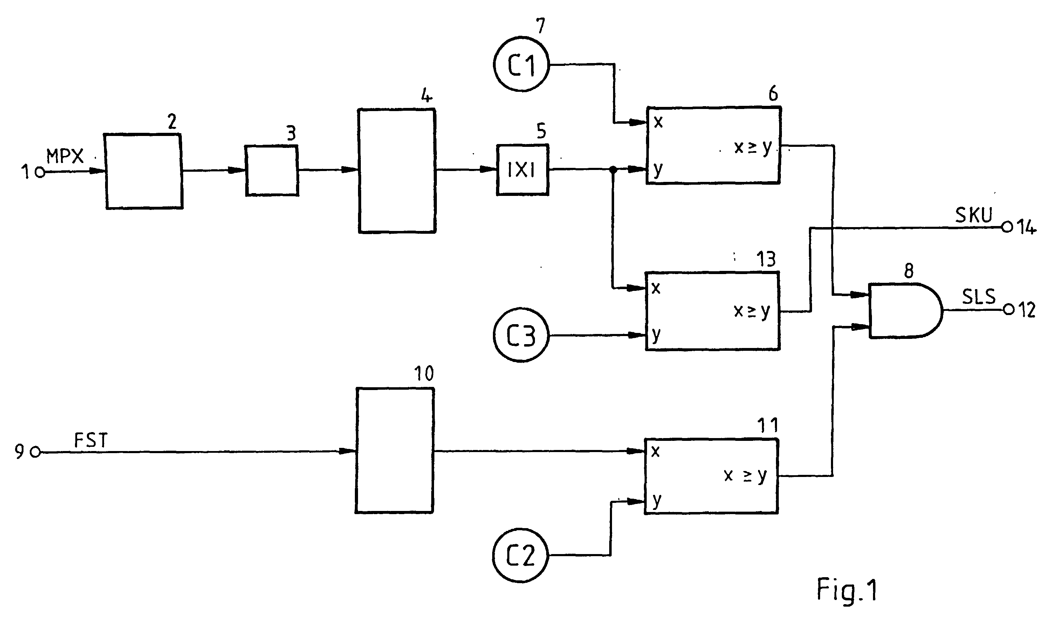

Die Schaltungsanordnung nach Fig. 1 dient außer zur Ableitung eines Stopp-Signals für den Sender-Suchlauf, was in der Patentanmeldung P 43 11 933.6 der Anmelderin beschrieben ist, zur Ableitung des ersten Hilfssignals SKU. Bei 1 wird ein Stereo-Multiplexsignal MPX zugeführt, das eine Abtastrate von 228 kHz aufweist, welche sich als vorteilhaft bei der vorangegangenen digitalen Signalverarbeitung herausgestellt hat. Da zur Bildung des ersten Hilfssignals SKU eine wesentlich niedrigere Abtastrate genügt, wird das Stereo-Multiplexsignal MPX über einen Tiefpaß 2 zu einer Schaltung 3 zur Abtastratenreduzierung um den Teiler 24 geleitet.

Das resultierende Signal wird einem weiteren Tiefpaß 4 zugeführt, dessen Grenzfrequenz sehr niedrig ist, so daß sich an seinem Ausgang praktisch nur der Gleichspannungsanteil ergibt, von welchem bei 5 der Betrag gebildet wird. Dieser wird in einem Komparator 6 mit einer bei 7 zugeführten Konstanten C1 von beispielsweise 0,07 (bezogen auf die Maximalamplitude) verglichen. Ist der Betrag des Gleichspannungsanteils kleiner als die Konstante C1, erscheint am Ausgang x≥y des Komparators 6 eine 1, die einem Eingang einer Und-Schaltung 8 zugeleitet wird.

Einem weiteren Eingang 9 der Schaltungsanordnung nach Fig. 1 wird ein Signal FST zugeleitet, welches der Feldstärke des jeweils empfangenen Signals entspricht. Dieses Signal wird bei 10 tiefpaßgefiltert und bei 11 mit einer Konstanten C2 verglichen. Ist die Feldstärke größer als ein durch die Konstante C2 vorgegebener Wert, so erscheint am Ausgang x≥y des Komparators 11 eine 1, die ebenfalls zur Und-Schaltung 8 geleitet wird. Sind beide Bedingungen erfüllt, so nimmt das Stopp-Signal SLS am Ausgang 12 der Und-Schaltung 8 ebenfalls den Pegel 1 an.

Zur Ableitung des Hilfssignals SKU ist ein weiterer Komparator 13 zugeführt, dem als Bezugswert eine Konstante C3 zugeführt wird. Ist der von dem Betragsbildner 5 zugeführte Gleichspannungsanteil größer oder gleich C3, nimmt das erste Hilfssignal SKU am Ausgang 14 den Pegel 1 an.

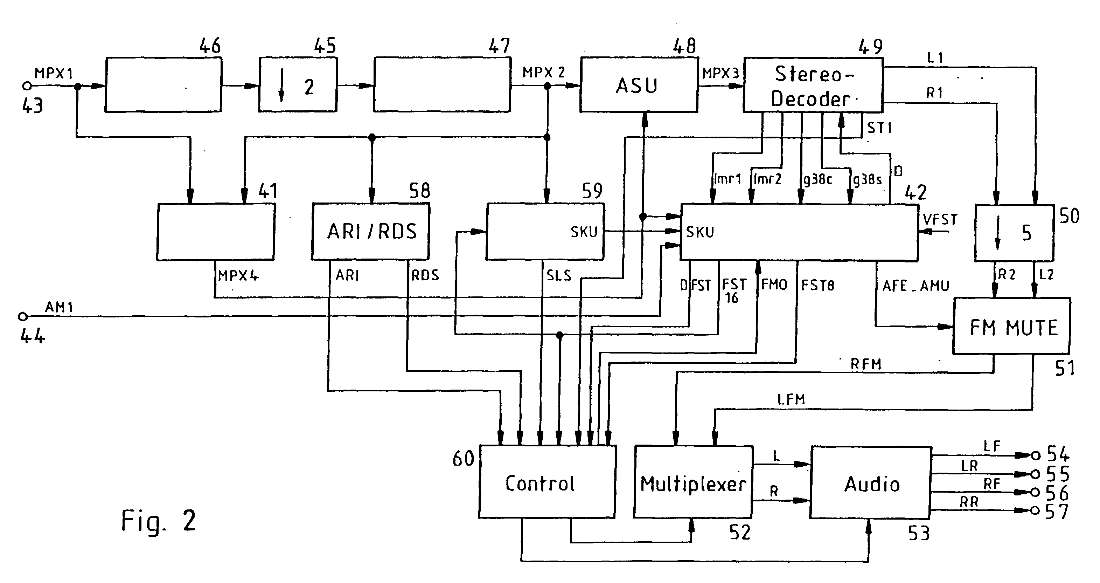

Fig. 2 zeigt die Verarbeitung eines Multiplexsignals MPX1 bishin zu Audiosignalen für vier Kanäle. Einem Eingang 43 wird von einem FM-Demodulator ein digitales Stereo-Multiplex-Signal MPX1 zugeleitet, während ein weiterer Eingang 44 von einem AM-Demodulator das Signal AM1 erhält. Bei einem praktisch ausgeführten Ausführungsbeispiel beträgt die Abtastrate des Signals MPX1 456 kHz, was ein ganzzahliges Vielfaches der Trägerfrequenz des Radio-Daten-Signals (57 kHz) ist.

Diese hohe Abtastfrequenz erfordert jedoch eine große Anzahl von Rechenoperationen je Sekunde. Bei dem dargestellten Rundfunkempfänger ist man deshalb bestrebt, mit möglichst geringen Abtastraten zu arbeiten, die an die Bandbreite des jeweiligen Signals angepaßt sind. Deshalb wird das Signal MPX1 bei 45 einer Abtastratenhalbierung unterzogen, wozu zuvor eine Tiefpaßfilterung 46 erforderlich ist. Da jedoch das an sich erforderliche Tiefpaßfilter mit einem geradlinigen Frequenzgang über den größten Teil des Durchlaßbereiches und einem steilen Abfall im Bereich der halben Abtastfrequenz sehr aufwendig ist, wurde ein Tiefpaßfilter 46 verwendet, das einen allmählichen Abfall aufweist. Ein Kompensationsfilter 47 mit einem entgegengesetzten Frequenzgang hebt jedoch den dadurch entstehenden Fehler wieder auf.

Das Signal MPX2 mit einer Abtastfrequenz von 228 kHz wird einer Schaltung 48 zur automatischen Störunterdrückung zugeleitet. Derartige Schaltungen unterdrücken kurze impulsförmige Störungen und sind unter dem Kürzel ASU bekanntgeworden. Das Ausgangssignal MPX3 der Schaltung 48 gelangt in einen Stereo-Decoder 49, der die beiden Audiosignale L1 und R1 (links und rechts) erzeugt, die bei 50 einer Abtastratenwandlung um den Teiler 5 unterzogen werden. Die dadurch entstehenden Audiosignale L2, R2 werden über eine Schaltung 51 mit steuerbarer Dämpfung als Signale LFM und RFM Eingängen eines Quellenumschalters 52 zugeführt. In nicht dargestellter Weise können dem Quellenumschalter andere Audiosignale zugeleitet werden, beispielsweise von einem CD-Spieler oder einem Bandgerät.

Die Ausgangssignale des Quellenumschalters 52 gelangen als Signale L, R zu einem Audioprozessor 53, mit dessen Hilfe Einstellungen, wie beispielsweise Lautstärke, Fader, Balance und Höhen- und Tiefenabsenkung bzw. -anhebung, vorgenommen werden. Der Audioprozessor 53 hat vier Ausgänge 54, 55, 56, 57, von denen die Signale LF, LR, RF und RR jeweils einer nicht dargestellten Endstufe für vier Lautsprecher zugeführt werden können.

Das Stereo-Multiplex-Signal MPX2 gelangt ferner zu einem Decoder 58 für Verkehrsfunksignale und/oder Radio-Daten-Signale. Außerdem wird das Signal MPX2 von einer Schaltung 59 für den Suchlaufstopp und das erste Hilfssignal SKU benötigt. Ein Ausführungsbeispiel dieser Schaltung wurde im Zusammenhang mit Fig. 1 beschrieben.

Eine Steuereinheit 60 erhält Signale von den Schaltungen 58, 59 und 42 sowie vom Stereo-Decoder 49. Sie gibt Signale ab an die Schaltung 42, den Quellenumschalter 52 und den Audioprozessor 53. Weitere Verbindungen der Steuereinheit 60 - beispielsweise mit Bedien- und Anzeigevorrichtungen - sind in Fig. 2 nicht dargestellt.

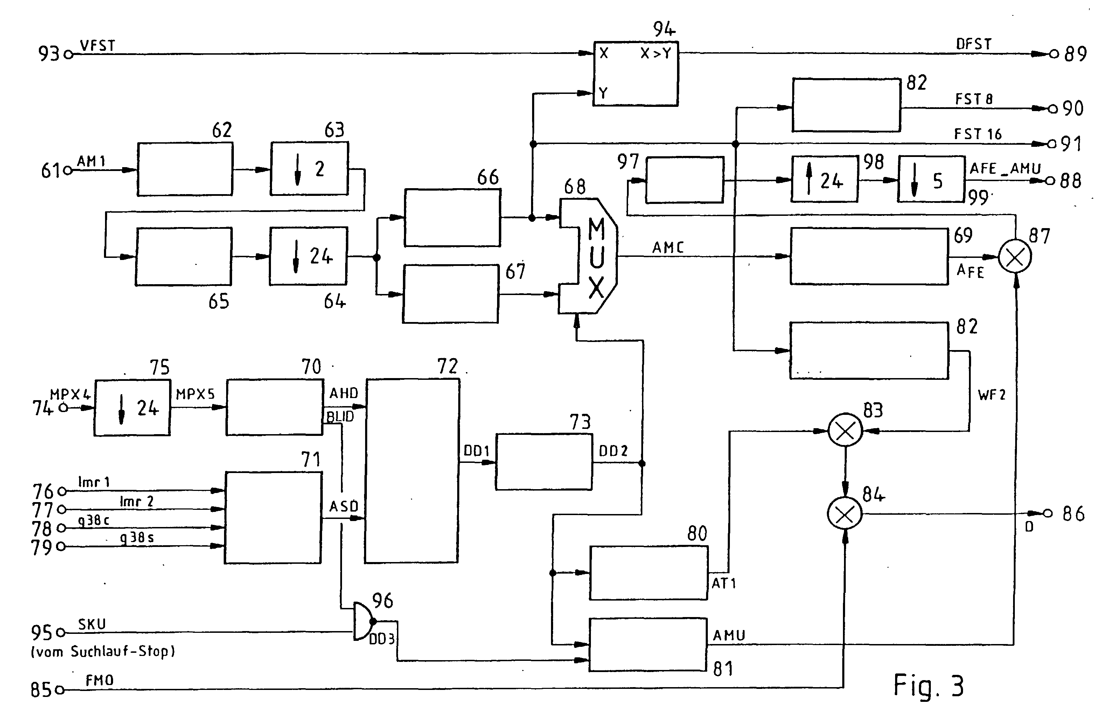

Für die Ableitung des zweiten Hilfssignals wird ein Signal benötigt, das aus den Anteilen des Stereo-Multiplex-Signals oberhalb von 60 kHz besteht. Dieses wird in der Schaltung 41 erzeugt, welcher die Signale MPX1 und MPX2 zugeführt werden. Ein Ausführungsbeispiel der Schaltung 41 ist in der Patentanmeldung P 43 09 518.6 zusammen mit anderen Details der Blockschaltbilder nach den Figuren 2 und 3 näher erläutert.

Fig. 3 stellt Details der Schaltung 42 (Fig. 2) dar, die zur Ableitung von Signalen dient, welche die Qualität der empfangenen Signale beschreiben. Bei 61 wird das Ausgangssignal AM1 eines nicht dargestellten Amplitudendemodulators zugeführt. Es dient als Maß für die Feldstärke. Das Signal AM1 mit einer Abtastfrequenz von 456 kHz wird zunächst in einem Filter 62 einer Tiefpaßfilterung unterzogen. Dieses verhindert zusammen mit dem Kammfilter 65, daß sich bei der nachfolgenden Unterabtastung um den Faktor 2 bei 63 und später um den Faktor 24 bei 64 höherfrequente Spektralkomponenten auf den Gleichanteil abbilden und diesen in unzulässiger Weise verfälschen. Eine weitere Tiefpaßfilterung (Kammfilter) 65 ist zwischen den Abtastgliedern 63 und 64 vorgesehen.

Das somit bezüglich der Abtastraten dezimierte Feldstärkesignal erfährt in zwei Tiefpaßgliedern 66, 67 eine Mittelung mit unterschiedlichen Zeitkonstanten. Ein Umschalter 68 leitet in Abhängigkeit eines Signals DD2 eines der Ausgangssignale der Tiefpaßglieder 66, 67 als Signal AMC weiter. Dieses wird bei 69 in Form einer Aufrauschkurve zur Erzeugung der Aufrauschdämpfung A_{FE} gewichtet. Das Feldstärkesignal der kleineren Zeitkonstante, also das "schnelle" Feldstärkesignal FST16 am Ausgang des Tiefpaßgliedes 66 dient außerdem zur Reduzierung der Stereokanaltrennung D bei Absinken der Feldstärke. Die weitere Verarbeitung der Signale A_{FE} und FST16 ist in der Patentanmeldung P 43 09 518.6 der Anmelderin erläutert.

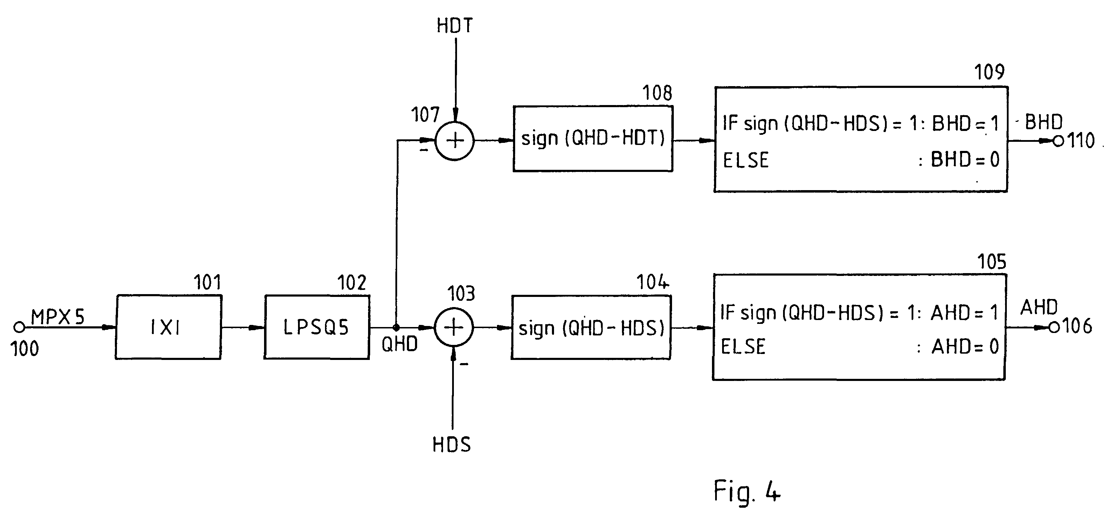

Zur Erzeugung des weiteren Signals DD2 dienen ein Hochpaß-Detektor 70, ein Symmetrie-Detektor 71 und ein logisches Netzwerk 72, dessen Ausgangssignal DD1 über einen Impulsbreitendiskriminator 73 geleitet wird. Dem Hochpaß-Detektor 70, der im einzelnen in Fig. 4 erläutert wird, wird über einen Eingang 74 und eine Abtastratenreduzierung 75 ein Signal MPX5 zugeführt, das Anteile des Stereo-Multiplex-Signals oberhalb von 60 kHz enthält, die jedoch bereits in das Basisband transformiert sind.

In dem Hochpaß-Detektor 70 wird unter anderem das zweite Hilfssignal BHD auf den Pegel 1 gesetzt, wenn Spektralkomponenten oberhalb von 60 kHz vorhanden sind. Dieses zweite Hilfssignal BHD wird zusammen mit dem bei 95 zugeführten ersten Hilfssignal SKU einer Nicht-Und-Schaltung 96 zugeführt, wodurch das Nachbarkanalstörungssignal DD3 gebildet wird, das im Falle von Nachbarkanalstörungen den Pegel 0 annimmt. Dieses Signal wird einem Eingang eines Integrators 81 zugeführt.

Ein weiteres Ausgangssignal AHD des Hochpaß-Detektors 70 nimmt den Wert 1 an, wenn die Amplitude von Signalanteilen oberhalb von 60 kHz oberhalb eines Schwellwertes liegen. Dieses hat den grundsätzlichen Vorteil, sehr pünktlich auf jede Art von Störungen - also auch auf solche, die keine Mehrwegestörungen sind - zu reagieren. Es kann jedoch im Extremfall dazu führen, daß zwar eine Störung gemeldet wird, die jedoch im ausseitigen NF-Signal des Empfängers noch zu keinen hörbaren Störungen führt. Trotzdem würden in diesem Fall die zur Maskierung von Störungen vorgesehenen Maßnahmen eingeleitet werden.

Zur Erkennung von hörbaren Störungen, die keine Nachbarkanalstörungen sind, erfolgt eine Auswertung der Symmetrie des trägerfrequenten Stereo-Differenzsignals. Wesentlich ist bei diesem Vorgehen einerseits, daß ein ungestörtes Signal aufgrund der Zwei-Seitenband-Amplitudenmodulation symmetrisch zum Träger sein muß, und andererseits, daß hier unmittelbar das Nutzsignal betrachtet wird. Eine Asymmetrie läßt daher den Schluß zu, daß eine auch im NF-Signal hörbare Störung vorliegt. Über Eingänge 76 bis 79 werden dem Symmetrie-Detektor 71 von einem Stereo-Decoder (Fig. 2) Signale zugeführt, die im wesentlichen das Produkt des trägerfrequenten Stereo-Differenzsignals mit einem Referenzträger darstellen, der in Quadratur zum Hilfsträger steht. Das Ausgangssignal ASD des Symmetrie-Detektors nimmt den Wert 1 an, wenn eine Asymmetrie vorhanden ist.

Bei vielen Anwendungsfällen bringt die Verwendung eines der Signale AHD bzw. ASD als weiteres Signal DD2 bereits erhebliche Vorteile. Bei dem dargestellten Ausführungsbeispiel sind jedoch beide Detektoren 70, 71 vorgesehen, wobei die Ausgangssignale AHD und ASD über ein logisches Netzwerk 72 geleitet werden. Dieses hat einerseits den Vorteil, daß bei reinen Mono-Sendungen, bei denen kein trägerfreqüentes Stereo-Differenzsignal gesendet wird, die Ableitung des weiteren Hilfssignals DD2 durch den Hochpaß-Detektor 70 erfolgt. Ebenso ist die Ableitung des weiteren Signals DD2 auch bei von der europäischen Norm abweichenden Verfahren zur Stereo-Signalübertragung möglich - beispielsweise bei dem FMX-Verfahren in den USA.

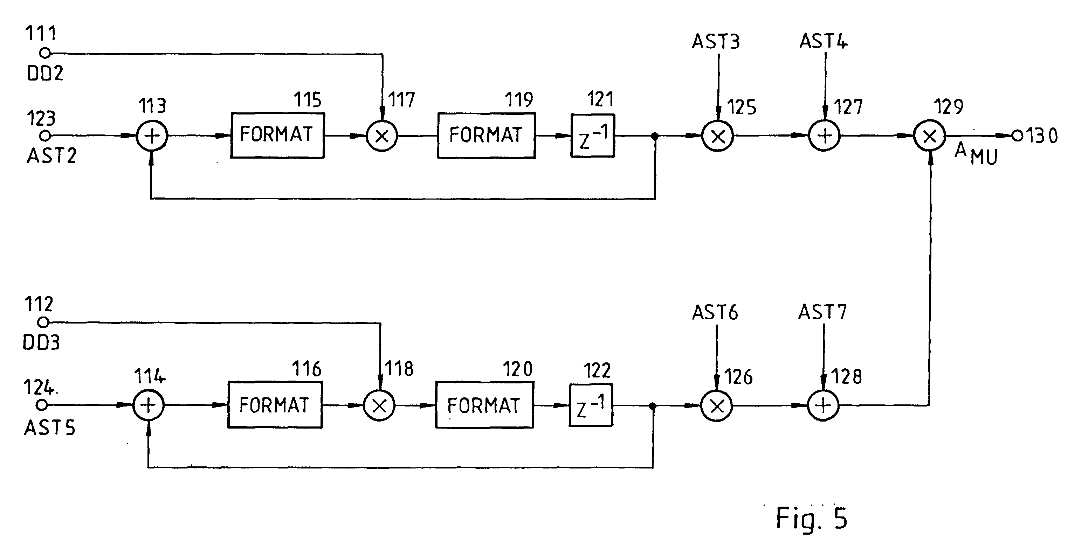

Das logische Netzwerk ermöglicht die Auswahl oder die Art der logischen Verknüpfung der beiden Signale AHD und ASD zum Signal DD1. Das Signal DD1 wird über einen Impulsbreitendiskriminator 73 geleitet, der dafür sorgt, daß das Ausgangssignal DD2 erst dann eine Störung anzeigt, wenn das Eingangssignal DD1 für eine einstellbare Mindestzeitdauer aktiv ist. Wie bereits erwähnt, schaltet das Signal DD2 zwischen einer großen und einer kleinen Zeitkonstanten bei der Bildung des Feldstärkesignals um. Ferner dient das Signal DD2 als Triggersignal für zwei asymmetrische Integratoren 80, 81, von denen ein Ausführungsbeispiel in Fig. 5 dargestellt ist.

Die Ausgangssignale AT1 und AMU der asymmetrischen Integratoren 80, 81 springen im Moment des Triggerns auf 0 bzw. auf einen voreingestellten Wert zwischen 0 und 1 und bleiben solange auf diesen Werten, wie DD2 und DD3 auf Null liegen, um dann mit einstellbaren Zeitkonstanten linear auf einen Maximalwert anzusteigen. Das Signal AT1 wird gemeinsam mit dem bei 82 gewichteten Feldstärkesignal WF2 einem Multiplizierer 83 zugeführt. Dadurch wird ein Signal gebildet, das eine Maskierung von Störungen im NF-Signal durch eine Verminderung der Stereokanaltrennung bewirkt. Dieses wird in einem weiteren Multiplizierer 84 mit einem bei 85 zugeführten Signal FMO multipliziert, das zur zwangsweisen Aufhebung der Stereokanaltrennung dient. Vom Ausgang 86 kann das Signal D entnommen und dem Stereo-Decoder zugeführt werden.

Das Ausgangssignal AMU des asymmetrischen Integrators 81 wird zusammen mit dem Signal A_{FE} einem weiteren Multiplizierer 87 zugeführt, wodurch nach Begrenzung bei 97 und Abtastratenwandlung bei 98 und 99 ein Signal AFE_AMU entsteht, das eine Dämpfung des NF-Signals um maximal den durch den Begrenzer 97 vorgegebenen Wert bewirkt, das dem Ausgang 88 entnehmbar ist.

In einem digitalen Rundfunkempfänger werden an mehreren Stellen Informationen zur Feldstärke benötigt. Dazu weist die Schaltungsanordnung nach Fig. 3 drei weitere Ausgänge 89, 90, 91 auf, an denen Signale abnehmbar sind, welche die Feldstärke beschreiben. Das Signal FST16 ist 16 Bit genau. Für manche Zwecke genügt jedoch auch ein Signal mit geringerer Genauigkeit, deswegen wird mit Hilfe einer Kompressionskennlinie 92 ein Feldstärkesignal FST8 mit einer Bitbreite von 8 erzeugt.

Die Signale FST16 und FST8 sind zwar für die Zwecke der Kennung der Signalqualität ausreichend schnell, sie sind jedoch durch die im Zusammenhang mit Fig. 3 beschriebenen Filter und gegebenenfalls durch die Amplituden-Demodulation nicht frei von einer gewissen Trägheit. Über einen Eingang 93 ist von einem nicht dargestellten Microcontroller ein Signal VFST zuführbar. Aus diesem Signal und dem Signal FST16 wird mit Hilfe eines Komparators 94 ein Signal DFST erzeugt, dessen jeweiliger Pegel (0 bzw. 1) davon abhängt, ob das Signal VFST oder das Signal FST16 größer ist. Dadurch zeigt das am Ausgang 89 abnehmbare Signal DFST die Änderungsrichtung der Feldstärke an.

Der Hochpaß-Detektor 70 wird im folgenden anhand von Fig. 4 näher erläutert. Einem Eingang 100 des Hochpaß-Detektors gemäß Fig. 4 ist das Signal MPX5 zuführbar, das nach einer Betragsbildung 101 mit Hilfe eines Tiefpaßfilters 102 gemittelt wird. Überschreitet das gemittelte Signal eine Schwelle HDS, nimmt das Ausgangssignal eines aus einem Subtrahierer 103 und einer Vorzeichenerkennung 104, 105 bestehenden Komparators den Wert 1 an. Das Signal AHD am Ausgang 106 nimmt ebenfalls den Wert 1 an, wenn das Vorzeichen des Ausgangssignals des Subtrahierers 103 positiv ist. Ein weiterer Komparator wird von einem weiteren Subtrahierer 107 und einer weiteren Vorzeichenerkennung 108, 109 gebildet. Das zweite Hilfssignal BHD am Ausgang 110 nimmt den Wert 1 an, wenn die höherfrequenten Spektralanteile den Bezugswert HDT überschreiten.

Ein Ausführungsbeispiel für den asymmetrischen Integrator 81 (Fig. 3) ist in Fig. 5 dargestellt. Dabei sind an sich zwei Integratoren vorgesehen, denen über Eingänge 111 und 112 die Signale DD2 und DD3 zuführbar sind. Jeweils ein Integrator besteht aus einem Addierer 113, 114, zwei Formatwandlern 115, 116 und 119, 120, einem Multiplizierer 117, 118 sowie einer Verzögerung 121, 122 um eine Abtastperiode. Bei 123 und 124 werden Integrationskonstanten AST2 und AST5 zugeführt. Am Beginn einer Nachbarkanalstörung wechselt das Signal DD3 auf den Wert 0. Dieses hat zur Folge, daß der Integrator für das Nachbarkanalstörungssignal DD3 auf 0 gesetzt wird. Diesen Ausgangswert behält der Integrator solange bei, wie Nachbarkanalstörungen vorliegen, das heißt, solange DD3 = 0 gilt.

Am Ende einer Nachbarkanalstörung nimmt DD3 wieder den Pegel 1 an, worauf der Integrator durch die Integration der Konstanten AST5 bis auf den Wert 1 hochläuft. In ähnlicher Weise wird mit dem Signal DD2 verfahren. Die Ausgangssignale beider Integratoren werden bei 125, 126 mit je einer Konstanten AST3, AST6 bewertet und anschließend bei 127, 128 zu je einer weiteren Konstanten AST4, AST7 addiert. Die Ergebnisse werden bei 129 miteinander multipliziert und kann einem Ausgang 130 als Signal A_{MU} entnommen werden.

## Patentansprüche

1. Schaltungsanordnung zur Erkennung von Nachbarkanalstörungen in einem Stereo-Rundfunkempfänger, bei dem ein Stereo-Multiplexsignal vorhanden ist, **dadurch gekennzeichnet, daß** erste Mittel (96) vorgesehen sind die in Abhängigkeit von einem Gleichspannungsanteil des Stereo-Multiplexsignals und in Abhängigkeit von Spektralkomponenten oberhalb von 60kHz des Stereo-Multiplexsignals ein die Nachbarkanalstörungen anzeigendes Signal (DD3) ableiten.

2. Schaltungsanordnung nach Anspruch 1, **dadurch gekennzeichnet, daß** zweite Mittel (2, 4, 5, 13) zur Ableitung eines ersten Hilfssignals (SKU) vorgesehen sind, wenn der Gleichspannungsanteil des Stereo-Multiplexsignals größer als ein erster Bezugswert (C3) ist, daß dritte Mittel (70) zur Bildung eines zweiten Hilfssignals (BHD) vorgesehen sind, wenn die Amplituden der Spektralkomponenten oberhalb von 60kHz des Stereo-Multiplexsignals größer als ein zweiter Bezugswert (HDT) sind, und daß die ersten Mittel (96) das erste und das zweite Hilfssignal zur Bildung des Nachbarkanalstörungssignals (DD3) UND-verknüpfen.

3. Schaltungsanordnung nach Anspruch 2, **dadurch gekennzeichnet, daß** die zweiten Mittel (2, 4, 5, 13) vierte Mittel (2) zur Tiefpaßfilterung des Stereo-Multiplexsignals umfassen, daß die zweiten Mittel (2, 4, 5, 13) weiterhin fünfte Mittel (4, 5) zur Gleichrichtung des tiefpaßgefilterten Stereo-Multiplexsignals umfassen und daß die zweiten Mittel (2, 4, 5, 13) einen ersten Komparator (13) zum Vergleichen des gleichgerichteten Signals mit dem ersten Bezugswert (C3) umfassen.

4. Schaltungsanordnung nach Anspruch 2 oder 3, **dadurch gekennzeichnet, daß** die dritten Mittel (70) sechste Mittel (101) zur Gleichrichtung des hochpaßgefilterten Stereo-Multiplexsignals umfassen, daß die dritten Mittel (70) siebte Mittel (102) zur Tiefpaßfilterung des gleichgerichteten Stereo-Multiplexsignals umfassen und daß die dritten Mittel (70) einen zweiten Komparator (107, 108, 109) zum Vergleich des tiefpaßgefilterten Signals mit dem zweiten Bezugswert (HDT) umfassen.

5. Schaltungsanordnung nach einem der vorherigen Ansprüche, **dadurch gekennzeichnet, daß** das Nachbarkanalstörungssignal (DD3) einem Integrator (81; 114, 116, 118, 120, 122) zugeführt wird, daß am Beginn einer Nachbarkanalstörung das Nachbarkanalstörungssignal (DD3) auf den Wert Null wechselt, so daß der Integrator für das Nachbarkanalstörungssignal (DD3) auf Null gesetzt wird, und daß am Ende der Nachbarkanalstörung das Nachbarkanalstörungssignal (DD3) wieder den Pegel Eins annimmt, worauf der Integrator durch Integration einer Konstanten (AST5) bis auf den Wert Eins hochläuft.

6. Schaltungsanordnung nach Anspruch 5, **dadurch gekennzeichnet, daß** die Zeitkonstante des Integrators (81; 114, 116, 118, 120, 122) bei vorhandenen Nachbarkanalstörungen kleiner als bei nicht vorhandenen Nachbarkanalstörungen ist.

7. Schaltungsanordnung nach Anspruch 6, **dadurch gekennzeichnet, daß** die Zeitkonstante des Integrators (81; 114, 116, 118, 120, 122) bei vorhandenen Nachbarkanalstörungen gleich Null ist.

8. Schaltungsanordnung nach Anspruch 5, 6 oder 7, **dadurch gekennzeichnet, daß** das Ausgangssignal des Integrators (81; 114, 116, 118, 120, 122) einem Begrenzer (97) zugeführt ist.

9. Schaltungsanordnung nach Anspruch 8, **dadurch gekennzeichnet, daß** Mittel (70, 71, 72, 73) zur Ableitung weiterer die Empfangsqualität darstellender Signale (DD2) vorgesehen sind, daß Mittel (81) zur Verknüpfung des Nachbarkanalstörungssignals (DD3) mit diesen weiteren Signalen (DD2) vorgesehen sind und daß das dadurch entstehende verknüpfte Signal (AMU) dem Begrenzer (97) zugeführt ist.

## Claims

1. Circuit arrangement for detecting adjacent channel interference in a stereo broadcast radio receiver in which a stereo multiplex signal is present, **characterized in that** first means (96) are provided which, on the basis of a DC voltage component of the stereo multiplex signal and on the basis of spectral components above 60 kHz of the stereo multiplex signal, derive a signal (DD3) which indicates the adjacent channel interference.

2. Circuit arrangement according to Claim 1, **characterized in that** second means (2, 4, 5, 13) for deriving a first auxiliary signal (SKU) are provided if the DC voltage component of the stereo multiplex signal is greater than a first reference value (C3), **in that** third means (70) for forming a second auxiliary signal (BHD) are provided if the amplitudes of the spectral components above 60 kHz of the stereo multiplex signal are greater than a second reference value (HDT), and **in that** the first means (96) subject the first and the second auxiliary signal to an AND operation in order to form the adjacent channel interference signal (DD3).

3. Circuit arrangement according to Claim 2, **characterized in that** the second means (2, 4, 5, 13) comprise fourth means (2) for low-pass filtering the stereo multiplex signal, **in that** the second means (2, 4, 5, 13) also comprise fifth means (4, 5) for rectifying the low-pass filtered stereo multiplex signal, and **in that** the second means (2, 4, 5, 13) comprise a first comparator (13) for comparing the rectified signal with the first reference value (C3).

4. Circuit arrangement according to Claim 2 or 3, **characterized in that** the third means (70) comprise sixth means (101) for rectifying the high-pass filtered stereo multiplex signal, **in that** the third means (70) comprise seventh means (102) for low-pass filtering the rectified stereo multiplex signal, and **in that** the third means (70) comprise a second comparator (107, 108, 109) for comparing the low-pass filtered signal with the second reference value (HDT).

5. Circuit arrangement according to one of the preceding claims, **characterized in that** the adjacent channel interference signal (DD3) is supplied to an integrator (81; 114, 116, 118, 120, 122), **in that** the adjacent channel interference signal (DD3) changes to the value zero at the start of adjacent channel interference, so that the integrator is set to zero for the adjacent channel interference signal (DD3), and **in that** the adjacent channel interference signal (DD3) assumes the level one again at the end of the adjacent channel interference, whereupon the integrator rises to the value one by integrating a constant (AST5).

6. Circuit arrangement according to Claim 5, **characterized in that** the time constant of the integrator (81; 114, 116, 118, 120, 122) is smaller in the presence of adjacent channel interference than in the absence of adjacent channel interference.

7. Circuit arrangement according to Claim 6, **characterized in that** the time constant of the integrator (81; 114, 116, 118, 120, 122) is equal to zero in the presence of adjacent channel interference.

8. Circuit arrangement according to Claim 5, 6 or 7, **characterized in that** the output signal from the integrator (81; 114, 116, 118, 120, 122) is supplied to a limiter (97).

9. Circuit arrangement according to Claim 8, **characterized in that** means (70, 71, 72, 73) for deriving further signals (DD2) which represent the reception quality are provided, **in that** means (81) for logically combining the adjacent channel interference signal (DD3) with these further signals (DD2) are provided, and **in that** the logically combined signal (AMU) produced thereby is supplied to the limiter (97).

## Revendications

1. Circuit de détection de perturbations de canal voisin dans un récepteur radio stéréo avec un signal stéréo multiplex,
**caractérisé par**
des premiers moyens (96) qui en fonction d'une composante de tension continue du signal stéréo multiplex et en fonction de composantes spectrales au-dessus de 60 kHz du signal stéréo multiplex déduisent un signal (DD3) indiquant les perturbations de canal voisin.

2. Circuit selon la revendication 1,
**caractérisé en ce que**
des seconds moyens (2, 4, 5, 13) sont prévus pour déduire un premier signal auxiliaire (SKU) si la composante de tension continue du signal stéréo multiplex est supérieure à une première valeur de référence (C3), les troisièmes moyens (70) sont prévus pour former un second signal auxiliaire (BHD) si les amplitudes des composantes spectrales supérieures à 60 kHz du signal stéréo multiplex sont supérieures à une seconde valeur de référence (HDT), et les premiers moyens (96) combinent le premier et le second signal auxiliaire pour former le signal de perturbations de canal voisin (DD3) par une combinaison logique ET.

3. Circuit selon la revendication 2,
**caractérisé en ce que**
les seconds moyens (2, 4, 5, 13) comportent des quatrièmes moyens (2) pour le filtrage passe-bas du signal stéréo multiplex, les seconds moyens (2, 4, 5, 13) comportent en outre des cinquièmes moyens (4, 5) pour redresser le signal stéréo multiplex filtré par un filtre passe-bas et les seconds moyens (2, 4, 5, 13) comportent un premier comparateur (13) pour comparer le signal redressé à la première valeur de référence (C3).

4. Circuit selon l'une quelconque des revendications 2 ou 3,
**caractérisé en ce que**
les troisièmes moyens (70) comprennent des sixièmes moyens (101) pour redresser le signal stéréo multiplex filtré par un filtre passe-haut, les troisièmes moyens (70) contiennent des septièmes moyens (102) pour le filtrage passe-bas du signal stéréo multiplex redressé et
les troisièmes moyens (70) comprennent un second comparateur (107, 108, 109) pour comparer le signal filtré par un filtre passe-haut à la seconde valeur de référence (HDT).

5. Circuit selon l'une quelconque des revendications précédentes,
**caractérisé en ce que**
le signal de perturbations de canal voisin (DD3) est appliqué à un intégrateur (81 ; 114, 116, 118, 120, 122),
au début d'une perturbation de canal voisin, le signal de perturbations de canal voisin (DD3) commute sur la valeur Zéro de sorte que l'intégrateur du signal de perturbations de canal voisin (DD3) passe au niveau Zéro, et
à la fin de la perturbation de canal voisin, le signal de perturbations de canal voisin (DD3) prend de nouveau le niveau Un puis l'intégrateur augmente jusqu'à la valeur Un par intégration d'une constante (AST5).

6. Circuit selon la revendication 5,
**caractérisé en ce que**
la constante de temps de l'intégrateur (81 ; 114, 116, 118, 120, 122) est plus petite en cas de perturbations de canal voisin qu'en l'absence de telles perturbations.

7. Circuit selon la revendication 6,
**caractérisé en ce que**
la constante de temps de l'intégrateur (81 ; 114, 116, 118, 120, 122) est égale à Zéro en cas de perturbations de canal voisin.

8. Circuit selon l'une quelconque des revendications 5, 6, 7,
**caractérisé en ce que**
le signal de sortie de l'intégrateur (81, 114, 116, 118, 120, 122) est appliqué à un limiteur (97).

9. Circuit selon la revendication 8,
**caractérisé par**
des moyens (70, 71, 72, 73) pour déduire d'autres signaux (DD2) représentant la qualité de réception,
des moyens (81) étant prévus pour combiner le signal de perturbations de canal voisin (DD3) avec ces autres signaux (DD2) et le signal de combinaison (AMU) obtenu est appliqué au limiteur (97).
